# EUROPEAN PATENT APPLICATION

(11) **EP 0 912 011 A2**
(43) Date of publication of application: **28.04.1999**
(21) Application number: 98119629.8
(22) Date of filing: 16.10.1998
(51) Int. Cl.: H04L 9/08

(54) **Method and apparatus for encoding and recovering keys**

(30) Priority: 20.10.1997 US 954170; 20.10.1997 US 955015
(71) Applicant: SUN MICROSYSTEMS, INC., Mountain View, CA 94043 (US)
(72) Inventor: Al-Salqan, Yahya Y., Mountain View, CA 94043 (US)
(74) Representative: Liesegang, Eva

(57) **Abstract**

A key such as a private key or key password of a private key is encrypted for storage, and may be decrypted if the private key becomes lost or unavailable. The key is encrypted by encoding, for example, by hashing, private information such as mother's maiden name and social security number, and the result is used as a key to encrypt the private key using DES or another symmetric encryption technique. The encrypted key is again encrypted, for example using asymmetric encryption, using the public key of a trusted party such as the certificate authority that generated the private key. The result may be stored as a key recovery file by the principal of the private key or another party. To decrypt the key recovery file, the private key corresponding to the public key used to encrypt the key recovery file is used to decrypt the key recovery file, for example by asymmetric decryption. The result is symmetrically decrypted using a key obtained by encoding, for example, by hashing, the private information in the same manner as was used to encrypt the key. The result of this decryption is the key.

## Description

### Related Applications

The subject matter of this application is related to the subject matter of application serial number AA/AAA,AAA entitled, "Method and Apparatus for Recovering Encryption Session keys" filed on June 30, 1997 by Yahya Y. Al-Salqan

### Field of the Invention

The present invention is related to cryptography and more specifically to the recovery of cryptographic keys.

### Background of the Invention

Encryption may be used to maintain the security of information. Information such as a message transmitted between a sender and a receiver may be encrypted to ensure that third parties do not have access to it. A computer file stored on a computer may also be encrypted to ensure that parties without authorization cannot obtain the information contained in the file, even if they have access to or possess the physical media on which the file is stored.

Two types of conventional encryption methods are used to secure information from misappropriation. Symmetric encryption methods use a key to encrypt information and use the same key to decrypt information. A message transmitted from sender to recipient may be symmetrically encrypted as long as the sender and the recipient have agreed upon the key. The Data Encryption Standard (DES) is an example of a symmetric encryption algorithm, and is described in Schneier, *Applied Cryptography*, (2d. ed., John Wiley & Sons, 1996).

Another form of encryption is known as asymmetric encryption. Asymmetric encryption encrypts information using one key known as a "public key", and decrypts the information using a different key known as a "private key". The private key is mathematically related to the public key, but extremely difficult to determine even if public key is known. Asymmetric encryption allows a person to post his or her public key for anyone to use to encrypt information to be sent to the holder of the private key. Messages encrypted using the public key remain secure against anyone but the person or persons who hold the private key.

The pair of public and private keys are generated by a cryptographic module, and provided to an individual. The individual shares the public key with others he expects will send him or her encrypted messages known as cipher text, while maintaining the secrecy of his or her private key. In order to bind the public key and the identity of the individual owner of the public key and private key pair, referred to herein as the "principal", a trusted party known as a "certificate authority" issues a certificate which allows third parties to verify the identity of the principal.

Many users of encryption will select from symmetric and asymmetric encryption methods to suit their needs. For example, symmetric encryption may be used to encrypt and decrypt messages to be sent over unsecure communication facilities. However, if the symmetric encryption key (referred to as a "session key") must be sent over an unsecure facility, the key itself may be encrypted asymmetrically prior to transmission. The recipient decrypts the session key using his private key, and then uses the session key to decrypt the message. This technique allows the relatively more secure asymmetric encryption to be used to secure the session key, while the faster-to-use symmetric encryption is used to secure the message.

If a file is being secured, many users will use the most secure method available. Because asymmetric encryption can be more secure than symmetric encryption, many users will use asymmetric encryption to encrypt stored data they wish to secure.

To ensure security of the private key, only the principal has access to it. Because the private key may be a lengthy string of difficult-to-remember bytes or characters, the private key may be DES-encrypted using a key password, which can be easier for the principal to remember. The encrypted private key is then stored, for example by a decryption program, and is accessible only with the key password. To use the private key, the principal types the key password to the decryption program or other program which stores the encrypted private key. The key password is used to decrypt the private key, and the decrypted private key is used to decrypt the message, file or other information encrypted using the public key. In the event that the principal loses or forgets his private key or the key password, it is virtually impossible to decrypt messages encrypted using the recipient's public key. It is not uncommon for a principal to lose or forget his or her private key or private key password.

Another problem results if the principal works in an organization. If the principal is the only person who knows the private key, and the principal dies or leaves the employment of the company that owns the encrypted information, the company will not have access to the encrypted information.

To allow the recovery of a lost, forgotten or unavailable private key, some certificate authorities keep a copy of each private key in a vault or other form of key escrow. However, a breach of security would allow an intruder to steal the private key and decrypt any message sent to the principal. In addition, to ensure the highest levels of security, some principals may not wish to allow third parties such as certificate authorities to keep copies of their private key.

Therefore, there is a need for a method and system to encrypt a key or key password to allow the key or key password to be securely stored and to allow the encrypted key or key password to be recovered by the principal or his or her organization if the private key or key password is lost or otherwise unavailable to a person authorized to use it.

### Summary of Invention

A system and method encrypts a principal's private key or key password for archival. Private information of the principal such as mother's maiden name and social security number is encoded, for example by hashing. The result of this encoding is used as a key to symmetrically encrypt the private key or key password. The encrypted private key or key password is again encrypted, for example asymmetrically using the public key of a trusted party such as a certificate authority as the encryption key. The result, known as a key recovery file, may be stored by the principal or other party trusted by the principal. If the principal's private key or key password is forgotten, lost or becomes unavailable to a party authorized to retrieve it, the stored key recovery file may be decrypted as described below.

The system and method accepts for decryption a key recovery file, for example, one encrypted as described above. The key recovery file may be decrypted, for example using the private key of the certificate authority whose public key was used to asymmetrically encrypt the key recovery file. Private information used to produce the key recovery file is received from the principal, another party who has been trusted with it, or from storage, and encoded, for example by hashing it, using the same encoding function as was used to produce the key recovery file. The encoded private information is used as a key to symmetrically decrypt the decrypted key recovery file and produce the private key or key password.

### Brief Description of the Drawings

Figure **1** is a block schematic diagram of a conventional computer system.
Figure **2** is a block schematic diagram of a system for encrypting a key to produce a key recovery file according to one embodiment of the present invention.
Figure **3** is a block schematic diagram of a system for decrypting a key recovery file to produce a key according to one embodiment of the present invention.
Figure **4** is a flowchart illustrating a method of encrypting a key to produce a key recovery file according to one embodiment of the present invention.
Figure **5** is a flowchart illustrating a method of decrypting a key recovery file to produce a key according to one embodiment of the present invention.

### Detailed Description of a Preferred Embodiment

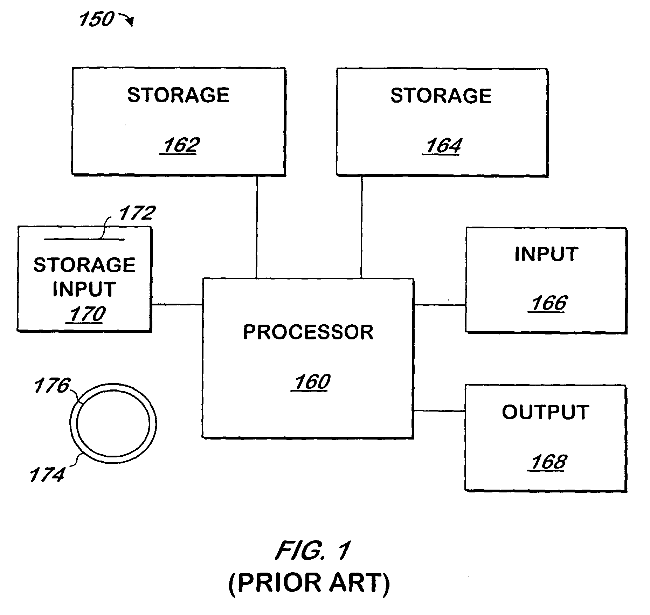

The present invention may be implemented as computer software on a conventional computer system. Referring now to Figure **1**, a conventional computer system **150** for practicing the present invention is shown. Processor **160** retrieves and executes software instructions stored in storage **162** such as memory, which may be Random Access Memory (RAM) and may control other components to perform the present invention. Storage **162** may be used to store program instructions or data or both. Storage **164**, such as a computer disk drive or other nonvolatile storage, may provide storage of data or program instructions. In one embodiment, storage **164** provides longer term storage of instructions and data, with storage **162** providing storage for data or instructions that may only be required for a shorter time than that of storage **164**. Input device **166** such as a computer keyboard or mouse or both allows user input to the system **150**. Output **168**, such as a display or printer, allows the system to provide information such as instructions, data or other information to the user of the system **150**. Storage input device **170** such as a conventional floppy disk drive, CD-ROM drive or smart card interface accepts via input **172** computer program products **174** such as a conventional floppy disk, CD-ROM, smart card or other nonvolatile storage media that may be used to transport computer instructions or data to the system **150**. Computer program product **174** has encoded thereon computer readable program code devices **176**, such as magnetic charges in the case of a floppy disk or optical encodings in the case of a CD-ROM which are encoded as program instructions, data or both to configure the computer system **150** to operate as described below.

In one embodiment, each computer system **150** is a conventional Sun Microsystems Ultra 1 Creator computer running the Solaris 2.5.1 operating system commercially available from Sun Microsystems of Palo Alto, California, although other systems may be used.

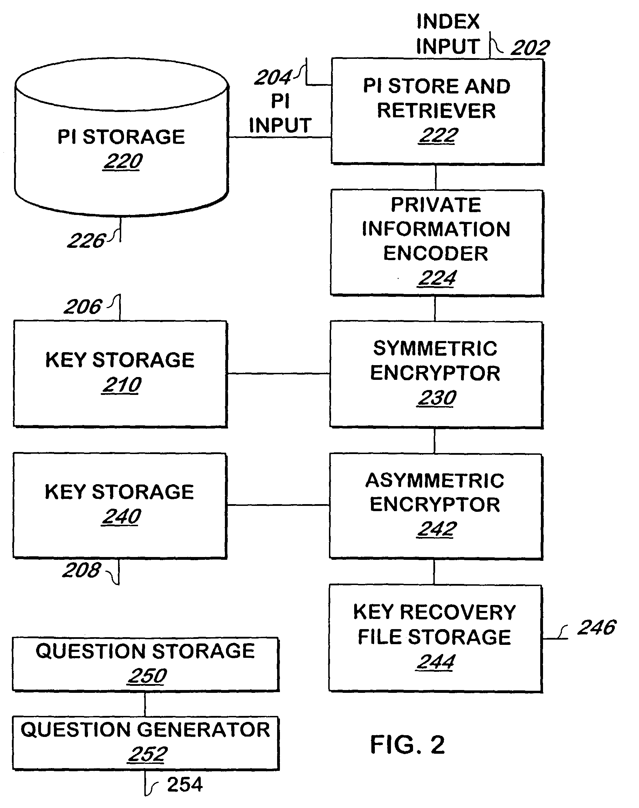

Referring now to Figure **2**, a system for encrypting a key is shown according to one embodiment of the present invention. As used herein, a "key" can include a conventional session key or other key used for encryption and decryption of symmetrically encrypted information, a conventional private key used to decrypt asymmetrically encrypted information, a key password of a conventional key or private key, or any other information that is concealed from the public and used in any manner to decrypt an encrypted message or used to obtain such a key. In one embodiment, the key encrypted by the present invention is a key, although other information may be encrypted according to the present invention. The key to be encrypted is received at input **206** and stored in key storage **210**. A key to be used to secure the key received at input **206**, such as the public key of the certificate authority that issued the key received at input **206** is received at input **208** and stored in key storage **240**. Private information storer and retriever **222** receives at input **204** private information. Private information is information that would likely be known only by the principal of the key received at input **206**, such as social security number, mother's maiden name, and other similar information.

The principal or other party providing the private information may be prompted for the private information. Questions which prompt the private information may be retrieved from question storage **250** and provided by question generator **252** at output **254** coupled to a computer terminal or other device so that the questions may be provided to the principal, or other person attempting to recover the key from the key recovery file.

In one embodiment, the present invention stores the private information received for use as described below. Private information storer and retriever **222** receives at index input **202** an index used to store the private information received at input **204**. In one embodiment, the index received at index input **202** is the public key of the individual providing the private information received at input **204**. Private information storer and retriever **222** stores the private information in the private information storage **220** indexed by the index received at the index input **202**. Private information storage **220** can provide the information indexed at output **226**. For use as described below.

Private information storer and retriever **222** passes the private information received at private information input **204** to private information encoder **224**. Private information encoder **224** encodes the private information it receives using any encoding function. In one embodiment, private information encoder **224** is a hasher, which hashes the private information it receives using a hash function. In one embodiment, the hasher is a SHA-1 hasher, which hashes the private information received using the conventional Secure Hash Algorithm, also referred to as the SHA-1 hash algorithm. In another embodiment, the hasher is an MD-5 hasher, which hashes the private information received using the conventional Message Digest 5 (MD-5) hash algorithm. The conventional Secure Hash Algorithm and MD-5 Algorithm are described in Schneier, *Applied Cryptography*, (2d. ed., John Wiley & Sons, 1996). Private information encoder **224** passes the result of the encoding to symmetric encryptor **230**.

Symmetric encryptor **230** receives the encoded private information from private information encoder **224** and the key from key storage **210** and encrypts the key using a symmetric encryption function, with the result of the encoding function used as the encryption key to the symmetric encryption. In one embodiment, symmetric encryptor **230** is a conventional DES encryptor, which uses the conventional DES encryption or conventional triple DES encryption as the symmetric encryption function. The conventional DES encryption function and the conventional triple DES encryption function are each referred to herein as "DES encryption" or "DES Encrypting" and are described in Schneier, *Applied Cryptography*, (2d. ed., John Wiley & Sons, 1996). Symmetric encryptor **230** passes the encrypted key to asymmetric encryptor **242**.

Asymmetric encryptor **242** encrypts the encrypted key received from symmetric encryptor **230** using an encryption method such as asymmetric encryption and the key received from and stored in key storage **240**. Asymmetric encryption is described in Schneier, *Applied Cryptography*, (2d. ed., John Wiley & Sons, 1996). Asymmetric encryptor **242** passes the resulting encrypted key, referred to as a key recovery file, to key recovery file storage **244**. Key recovery file storage provides at output **246** the key recovery file, which may be stored by the principal or others to retrieve the key encrypted therein. The key recovery file may then be deleted from key recovery file storage **244** so that only the principal or others authorized by the principal or other person receiving the key recovery file has the key recovery file.

In one embodiment, a user may not only assign a key password to a private key, but also occasionally update a key password. In one embodiment, a new key recovery file is produced as described herein using the present invention when the key password is assigned or updated.

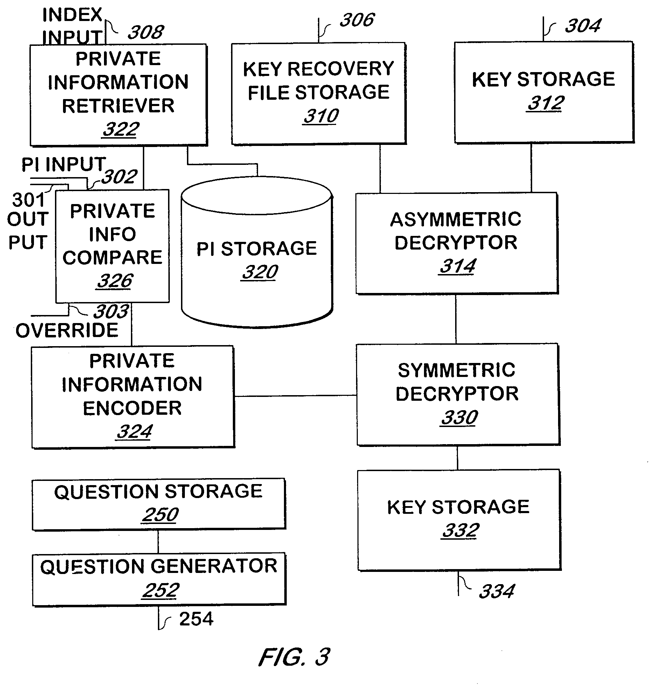

Referring now to Figure **3**, a system for decrypting a key recovery file to produce a key is shown according to one embodiment of the present invention. The key recovery file is received at input **306** and stored in key recovery file storage **310**. A key that will decrypt the encryption performed by the asymmetric encryptor **242** of Figure **2** is supplied at input **304** and stored in key storage **312**. If the key used to encrypt the key recovery file was the certificate authority's public key, the key received at input **304** is the certificate authority's private key.

Asymmetric decryptor **314** receives the key recovery file from key recovery file storage **310** and receives the certificate authority's private key from key storage **312**. Asymmetric decryptor **314** decrypts the key recovery file using the certificate authority's private key stored in key storage **312** as the key. In one embodiment, the decryption asymmetric decryptor performs is conventional asymmetric decryption. Conventional asymmetric decryption is described in Schneier, *Applied Cryptography*, (2d. ed., John Wiley & Sons, 1996). Asymmetric decryptor **314** passes the decrypted key recovery file to symmetric decryptor **330**.

In one embodiment, the principal may be prompted for the private information. Questions which prompt the private information may be retrieved from question storage **250** and provided by question generator **252** at output **254** coupled to a computer terminal or other device so that the questions may be provided to the principal, or other person attempting to recover the key from the key recovery file. Private information corresponding to these questions is received at input **302** by private information compare **326**.

In one embodiment, the private information stored in private information storage **320** may be retrieved. In one embodiment, private information is, or contains information copied from or similar to, private information storage **220** of Figure **2**. In such embodiment, private information storage **320** is managed by a trusted party, such as the certificate authority. An index, such as the principal's public key, is received at input **308** and used by private information retriever **322** as an index into private information storage **320**. Private information retriever **322** retrieves the private information stored in private information storage **220** and provides the private information to private information compare **326**.

Private information compare **326** compares the private information received at input **302** with the private information received from private information retriever **322**. If the private information received at input **302** matches or nearly matches the private information received from private information retriever **322**, private information compare **326** passes the private information received at input **302** or the private information received from private information retriever **322** to private information encoder. If no such match is made, in one embodiment, private information compare **326** does not pass any private information to private information encoder **324**, and in another embodiment, private information compare passes the private information received at input **302** to private information encoder **324**.

The private information may not be available from the principal, for example if the principal leaves the employment of an organization that continues to receive messages encrypted using the former employee's public key, or the organization wishes to decode information stored by the former employee and encrypted using a key known to the former employee and encrypted in a key recovery file as described above. In such embodiment, the user of the system shown in Figure **3** can verify the identity of the person requesting the recovery of the key and signal via input **303**, coupled to a conventional input device, such as a keyboard or mouse, that the comparison performed by private information compare **326** is to be overridden. Private information compare **326** then passes the private information received from private information retriever **322** to private information encoder **324**.

In one embodiment, private information storage **320**, private information retriever **322** and private information compare **326** are not used. Private information input **302** is coupled to the private information encoder **324**, which encodes as described below whatever private information it receives via private information input **302**.

Private information encoder **324** encodes the private information using the same procedure as private information encoder **224** of Figure **2**. In one embodiment private information encoder **324** encodes the private information into a fixed length result, for example using a hash function such as SHA-1 or MD-5 as described above. Private information encoder **324** provides the encoded private information to symmetric decryptor **330**.

Symmetric decryptor **330** decrypts the key recovery file decrypted by symmetric decryptor **314** using the encoded private information received from private information encoder **324** as the decryption key. In one embodiment, symmetric decryptor employs a conventional symmetric decryption algorithm, such as the conventional DES algorithm or conventional triple DES algorithm to perform the decryption. As used herein, "DES decrypting" means decrypting using conventional DES decryption or triple DES decryption. In one embodiment, the decryption algorithm used by symmetric decryptor **330** is the decryption algorithm that corresponds to the encryption algorithm employed by symmetric encryptor **230** of Figure **2**. Symmetric decryptor passes the result to key storage **332**. This result is the private key. The private key is then provided at output **334.**

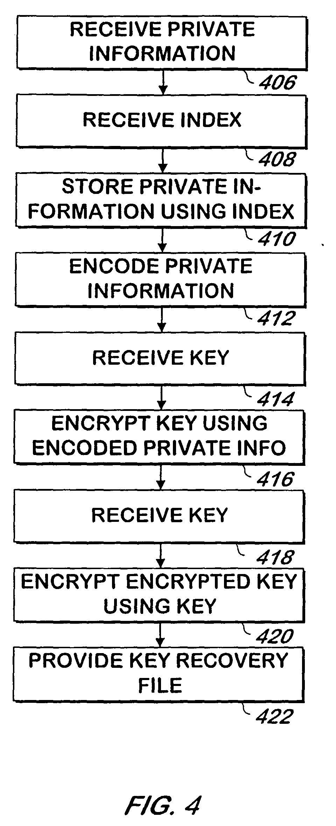

Referring now to Figure **4**, a method of encrypting a key to produce a key recovery file is shown according to one embodiment of the present invention. Private information is received as described above **406**. In one embodiment, an index is received **408**, and the private information is stored **410** indexed by the index received. In one such embodiment, the index is the public key corresponding to the private key being encrypted.

The private information is encoded **412** as described above, for example using a hashing algorithm such as the secure hash algorithm SHA-1 or MD-5. The key to be encrypted is received **414**. The key is encrypted **416**, for example by using a symmetric encryption algorithm, such as DES encryption, with the private information encoded in step **412** as the encryption key.

A key, such as a public key of a trusted party such as the certificate authority that generated the key received in step **414** is received **418**. The encrypted key produced in step **416** is encrypted **420**, for example by using an asymmetric encryption function, with the key received in step **418** as the key to the encryption function. The result of step **420** is the key recovery file. The key recovery file is then provided **422** to the owner of the key or another party for safekeeping, and may be deleted by the party that produced the key recovery file.

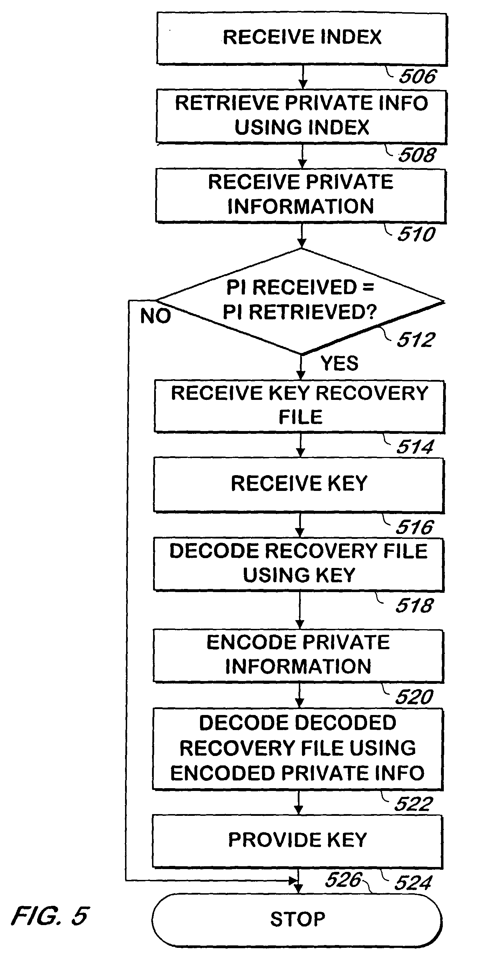

Referring now to Figure **5**, a method of decrypting a key recovery file is shown according to one embodiment of the present invention. In one embodiment, the private information is stored as described above. An index may be used to retrieve the private information from storage. In such embodiment, the index is received **506** and the private information is retrieved **508** using the index received in step **508** as described above. In one embodiment, the index is the public key of the principal whose key is to be decrypted.

If the principal or other party is available to provide his or her private information, the private information is received **510**, and compared **512** with the private information stored. If the private information received in step **510** is not equal to the private information retrieved from storage in step **508**, the method terminates **526** in one embodiment.

If the principal is not available to provide his private information, steps **510** and **512** may be omitted, or replaced with other verification procedures to verify that the party requesting the recovery of the key recovery file is authorized to receive the key encoded in the key recovery file. Such verification may include receiving a sworn statement from an officer of a company, and comparing the name of the company with the name of the company listed on a certificate for the private key and public key pair. The key recovery file is also received **514**.

A key corresponding to the key used to encode the key recovery file in step **420** of Figure **4**, such as a private key of the trusted party who provided their public key to encrypt the key recovery file, is also received **516**. The key received in step **516** is used to decode **518** the key recovery file, such as by using conventional asymmetric decryption techniques. The private information received at step **512** is encoded **520**, for example by hashing it using a hash function such as the SHA-1 or MD-5 hash function. The private information encoded at step **520** is used as a decryption key to symmetrically decode **522** the key recovery file decoded in step **518**. The result is the key, which may be provided **524** to the party desiring the key.

## Claims

1. A system for decrypting a key recovery file comprising an encrypted first key, the system comprising:
an first decryptor, having a first input operatively coupled to receive at least a portion of the key recovery file and a second input operatively coupled to receive a second key, the first decryptor for decrypting at least a portion of the portion of the key recovery file received responsive to the second key received to produce a first decrypted first key and for providing at an output the first decrypted first key;
a private information encoder having an input operatively coupled to receive a first set of private information, the private information encoder for encoding the first set of private information to produce encoded private information and for providing at an output the encoded private information; and
a second decryptor having a first input coupled to the first decryptor output for receiving the first decrypted first key and a second input coupled to the private information encoder output for receiving the encoded private information, the second decryptor for symmetrically decrypting the first decrypted first key received at the second decryptor first input responsive to the encoded private information received at the second decryptor second input to produce the first key and for providing the first key at an output coupled to a system output.

2. The system of claim 1 additionally comprising:
a private information storage for storing a second set of private information, and for providing at an output coupled to the private information encoder input at least a portion of the second set of the private information stored responsive to a first index received at an input; and
a private information retriever having an index input operatively coupled to receive a second index, the private information retriever for providing at a first output coupled to the private information storage input the second index received at the index input.

3. The system of claim 2, additionally comprising a private information compare having a first input coupled to the private information storage output for receiving the portion of the second set of private information and a second input operatively coupled to receive a third set of private information, the private information compare for comparing the portion of the second set of private information received at the private information compare first input and the third set of private information received at the private information compare second input and providing at an output coupled to the private information encoder input one selected from the portion of the second set of private information and the third set of private information responsive to the portion of the second set of private information received at the private information compare first input substantially equivalent to the third set of private information received at the private information compare second input.

4. The system of claim 3 wherein the private information compare comprises an override input having a first state and a second state and the private information compare additionally provides at the private information compare output the portion of the second set of private information responsive to the override input in the first state.

5. The system of one of the preceding claims, wherein:
the first key is one selected from a key password of a private key and a private key;
the second index is a public key; and
the private key is capable of use for decrypting information encrypted using the public key.

6. The system of one of the preceding claims wherein:
the private information encoder comprises a hasher having an input coupled to the private information encoder input to receive at least a portion of the private information, the hasher for hashing the private information received at the hasher input to produce hashed private information, and for providing the hashed private information at an output coupled to the private information encoder output; and
the encoded private information comprises the hashed private information.

7. The system of claim 6, wherein the hasher comprises a SHA-1 hasher having an input coupled to the hasher input to receive at least a portion of the private information, the SHA-1 hasher for SHA-1-hashing the private information received at the SHA-1 hasher input to produce and provide at an output coupled to the hasher output the SHA-1-hashed private information; and
the encoded private information comprises the SHA-1-hashed private information.

8. The system of claim 6, wherein the hasher comprises a MD-5 hasher having an input coupled to the hasher input to receive at least a portion of the private information, the MD-5 hasher for MD-5-hashing the private information received at the MD-5 hasher input to produce and provide at an output coupled to the hasher output the MD-5-hashed private information; and
the encoded private information comprises the MD-5-hashed private information.

9. The system of one of the preceding claims wherein:
the second decryptor comprises a DES decryptor having a first input coupled to the second decryptor first input for receiving the first decrypted first key, a second input coupled to the symmetric decryptor second input for receiving the encoded private information, the DES decryptor for DES decrypting the first decrypted first key received at the DES decryptor second input responsive to the encoded private information received at the DES decryptor second input to produce a DES-decrypted first key, and for providing at an output coupled to the second decryptor output the DES-decrypted first key; and
the first decrypted first key comprises the DES-decrypted first key.

10. The system of one of the preceding claims wherein the second key is a private key.

11. The system of claim 10 wherein:
the first key is one selected from a key password of a private key generated by a certificate authority and a private key generated by a certificate authority; and
the second key is a private key of the certificate authority.

12. The system of one of the preceding claims wherein:
the first decryptor comprises an asymmetric decryptor having a first input coupled to the first decryptor first input to receive at least a portion of the key recovery file and a second input coupled to the first decryptor second input to receive the second key, the asymmetric decryptor for asymmetrically decrypting the key recovery file responsive to the second key to produce an asymmetrically decrypted key recovery file, and for providing at the output the asymmetrically decrypted key recovery file; and
the first decrypted first key comprises the asymmetrically decrypted first key.

13. A method of decrypting a key recovery file comprising an encrypted first key, the method comprising:
receiving at least a portion of the key recovery file;
receiving a second key;
decrypting the key recovery file received responsive to the second key received;
receiving private information;
encoding the private information received; and
responsive to the private information encoded, symmetrically decrypting the key recovery file decrypted.

14. The method of claim 13 wherein the receiving private information step comprises:
providing an index; and
receiving private information responsive to the index provided.

15. The method of claim 14, wherein:
the receiving private information step additionally comprises receiving an index;
the index provided comprises at least a portion of the index received; and
the index received comprises a public key.

16. The method of claim 14 or 15 additionally comprising the steps of:
receiving a second set of private information;
comparing the private information received with the second set of private information received; and
wherein the encoding and symmetrically decrypting steps are responsive to the private information received substantially equivalent to the second set of private information received.

17. The method of one of claims 13-16 wherein the encoding step comprises hashing the private information received using a hash function.

18. The method of claim 17 wherein the hash function is one selected from SHA-1 and MD-5.

19. The method of one of claims 13-18 wherein the symmetrically decrypting step comprises DES decrypting the key recovery file decrypted using the private information encoded as a decryption key.

20. The method of one of claims 13-19 wherein decrypting the key recovery file comprises asymmetrically decrypting the key recovery file using the second key received as a decryption key.

21. The method of one of claims 13-20 wherein the second key is a private key.

22. The method of claim 21 wherein:
the encrypted first key is produced from one selected from a key password of a first private key generated by a certificate authority and a first private key generated by a certificate authority; and
the second key comprises a certificate authority private key.

23. A computer program product comprising a computer useable medium having computer readable program code embodied therein for performing the method of one of claims 13-22.

24. A system for encrypting a first key, comprising:
a private information encoder having an input operatively coupled to receive private information, the private information encoder for encoding the private information received at the first input to produce encoded private information and for providing at a private information encoder output the encoded private information;
a first encryptor having a first input coupled to the private information encoder output to receive the encoded private information and a second input operatively coupled to receive the first key, the first encryptor for symmetrically encrypting the first key responsive to the encoded private information to produce a symmetrically encrypted first key and for providing at a first encryptor output said symmetrically encrypted first key; and
a second encryptor having a first input coupled to the first encryptor output for receiving the symmetrically encrypted first key and a second input operatively coupled to receive a second key, the second encryptor for encrypting the symmetrically encrypted first key responsive to the second key to produce a key recovery file, and for providing at a second encryptor output coupled to a system output the key recovery file.

25. The system of claim 24, additionally comprising a private information storage having a first input coupled to the private information encoder input to receive at least a portion of the private information, the private information storage for storing at least a portion of the private information.

26. The system of claim 25 wherein:
the private information storage additionally has a second input operatively coupled for receiving an index; and
the private information storage stores at least the portion of the private information responsive to the index received at the private information storage second input.

27. The system of one of claims 24-26 wherein:
the first key is one selected from a key password of a private key and a private key; and
the index is a public key related to the private key.

28. The system of one of claims 24-27, wherein:
the private information encoder comprises a hasher having an input coupled to the private information encoder input and an output coupled to the private information encoder output, the hasher for hashing the private information received at the hasher input to produce a hashed private information and for providing at the hasher output the hashed private information; and
the encoded private information comprises the hashed private information.

29. The system of claim 28, wherein:
the hasher comprises a SHA-1 hasher having an input coupled to the hasher input for receiving at least a portion of the private information, the SHA-1 hasher for SHA-1-hashing the private information received at the SHA-1 hasher input to produce SHA-1-hashed private information, and for providing at an output coupled to the hasher output the SHA-1-hashed private information; and
the encoded private information comprises the SHA-1-encoded private information.

30. The system of claim 28, wherein:
the hasher comprises an MD-5 hasher having an input coupled to the hasher input for receiving at least a portion of the private information, the MD-5 hasher for MD-5-hashing the private information received at the MD-5 hasher input to produce MD-5-hashed private information, and for providing at an output coupled to the hasher output the MD-5-hashed private information; and
the encoded private information comprises the MD-5-encoded private information.

31. The system of one of claims 24-30 wherein:
the first encryptor comprises a DES encryptor having a first input coupled to the first encryptor first input for receiving the encoded private information, a second input coupled to the first encryptor second input for receiving the first key, the DES encryptor for DES encrypting the first key received at the DES encryptor second input responsive to the encoded private information received at the DES encryptor first input to produce a DES-encrypted first key, and for providing at an output coupled to the first encryptor output the DES-encrypted first key; and
the symmetrically encrypted first key comprises the DES-encrypted first key.

32. The system of one of claims 24-31 wherein the second key received at the second encryptor second input is a public key.

33. The system of claim 32 wherein:
the first key is a private key related to a certificate authority; and
the second key is a public key of the certificate authority.

34. The system of claim 33 wherein the second encryptor encrypts the symmetrically encrypted private key using asymmetric encryption.

35. A method of encrypting a first key, comprising:
receiving private information;
encoding the private information received;
receiving the first key;
encrypting the first key responsive to the private information encoded;
receiving a second key; and
encrypting the encrypted first key responsive to the second key.

36. The method of claim 35 comprising the additional step of storing the private information received.

37. The method of claim 36 wherein:
the first key comprises one selected from a key password of a private key and a private key; and
the storing step comprises storing the private information indexed using a public key related to the private key.

38. The method of one of claims 35-37 wherein the encoding step comprises hashing the private information received responsive to a hash function.

39. The method of claim 38 wherein the hash function is one selected from SHA-1 and MD-5.

40. The method of one of claims 35-39 wherein the encrypting the first key step comprises DES encrypting the first key, using the private information encoded as an encryption key.

41. The method of one of claims 35-40 wherein encrypting the encrypted first key comprises asymmetrically encrypting the encrypted first key using the second key received as an encryption key.

42. The method of one of claims 35-41 wherein the second key is a public key.

43. The method of claim 42 wherein the first key is generated by a certificate authority, and the second key comprises a certificate authority public key.

44. A computer program product comprising a computer useable medium having computer readable program code embodied therein for performing the method of one of claims 35-43.
